# EUROPEAN PATENT SPECIFICATION

(11) **EP 0 374 337 B1**
(45) Date of publication and mention of the grant of the patent: **15.03.1995**
(21) Application number: 88480101.0
(22) Date of filing: 23.12.1988
(51) Int. Cl.: G06F 9/46, G06F 13/16

(54) **Load balancing technique in shared memory with distributed structure**
Lastausgleichstechnik in einem gemeinsamen Speicher mit verteilter Struktur
Technique d'équilibrage de charge dans une mémoire commune à structure distribuée

(43) Date of publication of application: 27.06.1990
(73) Proprietor: International Business Machines Corporation, Armonk, N.Y. 10504 (US)
(72) Inventor: Tran-Gia, Phuoc, Prof.Dr.Ing., Am Hubland, D-8700 Würzburg (DE); Pauporté, André, F-06480 La Colle sur Loup (FR)
(74) Representative: Barth, Carl Otto

(56) References cited:
- EP-A- 0 234 803
- US-A- 4 393 459
- PATENT ABSTRACTS OF JAPAN, vol. 8, no. 10 (P-248)[1447], 18th January 1984;& JP-A-58 169 649 (FUJITSU K.K.) 06-10-1983
- IBM TECHNICAL DISCLOSURE BULLETIN, vol. 29, no. 3, August 1986, pages 1120,1121,New York, US:"Date set load-balancing algorithm"
- IBM TECHNICAL DISCLOSURE BULLETIN, vol. 19, no. 6, November 1976, pages 2159-2167, New York, US; L. WYMAN: "Intermemory communications facility"

## Description

### FIELD OF INVENTION

Present invention relates to systems where multiple users have access to a common or shared memory consisting of a plurality of memory modules (memory banks) which are separately accessible, and in particular to a method for balancing the load, i.e. the storage utilization among all memory modules.

### BACKGROUND

For systems having a plurality of shared resources such as processors, I/O devices, buffers etc. it is of interest to balance the load or utilization between the resources to optimize the performance of the system. Several solutions for balancing the utilization among multiple devices have been suggested, as is reflected in the following list of patents and publications.

U.S.Patent 3,702,006 entitled "Method for Balancing the Utilization of Input/Output Devices". -- U.S.Patent 4,403,286 entitled "Balancing Data-Processing Workloads". -- U.S.Patent 4,633,387 entitled "Load Balancing in a Multiunit System".

Publications in IBM Technical Disclosure Bulletin: -- J.A.McLoughlin: "Load Balancing Buffered Peripheral Subsystem"; Vol.24, No.1B (June 1981) pp.707-709. -- D.C.Cole et al.: "Recalibrating Buffer Peripheral Systems"; Vol.24, No.2 (July 1981) pp.1041-1042. -- G.A.McClain et al.: "Multiple Utilization Threshold Control for I/O"; Vol.24, No.3 (Aug.1981) p.1406. -- D.W.Bolton et al. "Combined Real-Virtual Fixed-Size Buffer Mechanism in Shared Storage"; Vol.27, No.4B (Sept.1984) pp.2655-2660.

In all of these known solutions, either a centrally-kept record is required for holding the information on the load or utilization status, or central processing is provided to obtain the necessary information and to exercise control for load balancing, and furthermore particular transmissions must be performed to collect or distribute the load status and/or control information involved.

The central storage or processing of balancing information can lead to a congestion when many transactions are made simultaneously, and it is detrimental if the respective unit fails, and the requirement for additional data transfers decreases the performance. Furthermore, the modular expansion of a system may not be possible if the centralized updating procedures are designed for a given configuration.

### OBJECTS OF THE INVENTION

It is a primary object of the invention to devise a technique for balancing the load among plural storage modules forming a shared storage for several users, in a fully decentralized manner.

It is a further object of this invention to provide a load balancing technique for a shared modular memory, which does not require particular data transfers for the exchange of load status information.

Another object of the invention is to devise a memory load balancing mechanism which allows a modular expansion of the number of memory modules or banks without a necessity for changes or adaptations in the user units, their interfaces and attachments, or in the commonly used units.

### SUMMARY OF THE INVENTION

These objects are achieved by a method of load balancing a shared memory as defined in Claim 1, and by a load-balanced shared memory device as defined in Claim 9.

This invention allows balancing of the storage load with a minimum of extra operations and no additional information transfers, by keeping a memory load status map with each user unit, and by updating it in convenient situations. For the updating, the transfer of separate information is avoided by using as carriers the command replies which are transferred frequently from memory banks to user units anyway.

Further features and advantages of the invention will become apparent from the following detailed description of a preferred embodiment in connection with the accompanying drawings.

### LIST OF DRAWINGS

Fig.1 is a block diagram of the overall configuration of a multiple user system with shared storage in which the invention is used;
Fig.2 is a schematic representation of the information flow and sequence of steps for a memory access in the system of Fig.1;
Fig.3 shows the formats of the commands and command responses which are used for storage operations in the system of Fig.1;
Fig.4 shows the formats of memory control blocks which are stored in the user's local memory and are used for information transfer between the user and its memory interface;
Fig.5 is a block diagram of the memory interface (MI) interconnecting a user and the shared memory in the system of Fig.1;
Fig.6 is a flow diagram of the memory command processing in the memory interface logic; and
Fig.7 is a flow diagram of the selection of a memory bank, as done by the memory interface using the load balancing technique of present invention.

### DETAILED DESCRIPTION

### 1) SYSTEM OVERVIEW

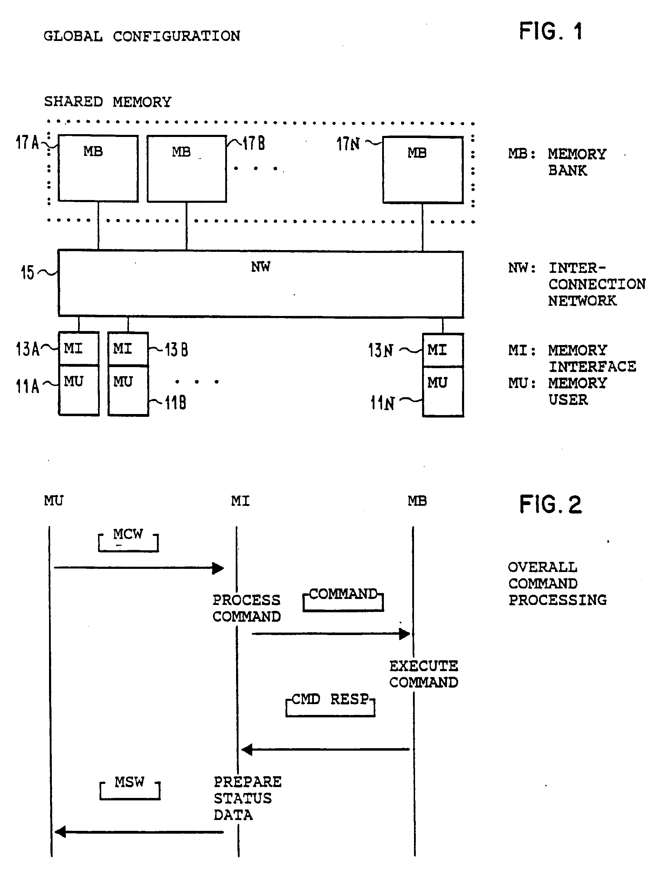

Fig.1 shows the configuration of a system in which present invention finds application. In principle it is a system in which multiple users are connected to multiple memory banks (memory modules) which function as common (or shared) memory for the whole set of users. Such arrangement is used, e.g., in communication controllers.

Each memory user MU (11A, 11B, ... 11N) is connected through its own memory interface MI (13A, 13B, ... 13N) to a common interconnection network NW (15). The memory banks MB (17A, 17B, ... 17N) are equal units which are individually connected to the interconnection network.

The interconnection network is a multiple port packet switch which, in response to data packets entered at one of its ports, can route those to the required output port. Such networks are known and are described e.g. in the following publications, and in the literature cited therein. T.Feng: "A Survey of Interconnection Networks"; Computer (IEEE) December 1981, pp.12-30. -- V.P.Kumar et al.: "Augmented Shuffle-Exchange Multistage Interconnection Networks"; Computer (IEEE) June 1987, pp.30-40.

The advantage of the whole arrangement is that it can be modularly expanded (as long as the interconnection network is of sufficient capacity and has enough ports). The number of memory banks can be adapted to the number of users and to the storage requirements they have.

The overall flow of commands and control information for memory accesses is schematically shown in the diagram of Fig.2

The memory user MU prepares a memory control word MCW specifying the desired operation and containing parameters. The MCW is transferred to the memory interface MI which processes the command request and sends a command to one of the memory banks MB. The command is executed in the MB (storing of data, reading of data, etc.) and a command response is returned to the MI. The MI prepares status data reflecting the response received from the MB and possibly additional state data reflecting how the memory operation completed, and these status data are transferred in a memory status word MSW to the MU.

The term "command" as used in the following description actually designates a request for a memory operation, which is sent from a Memory User/Memory Interface to a Memory Bank (such as CREATE command, PUT command, etc).

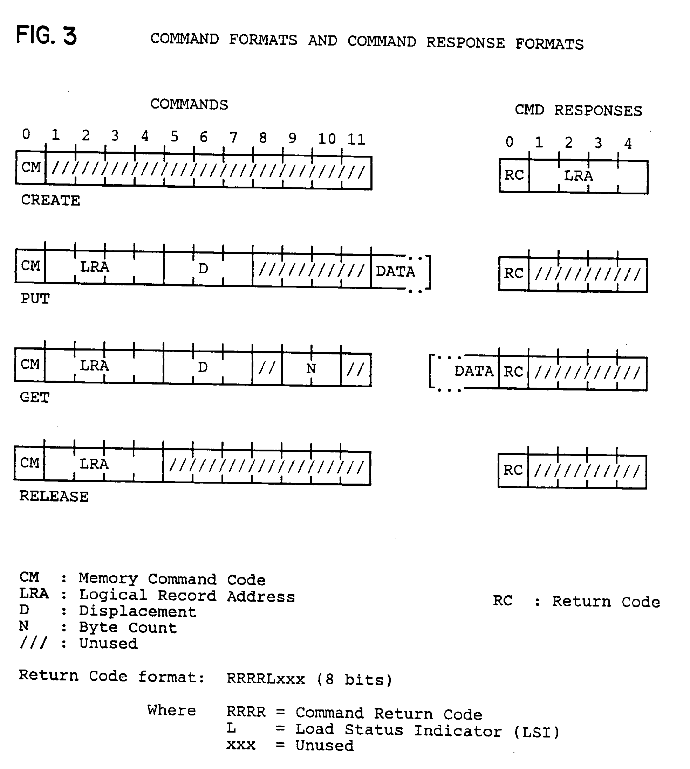

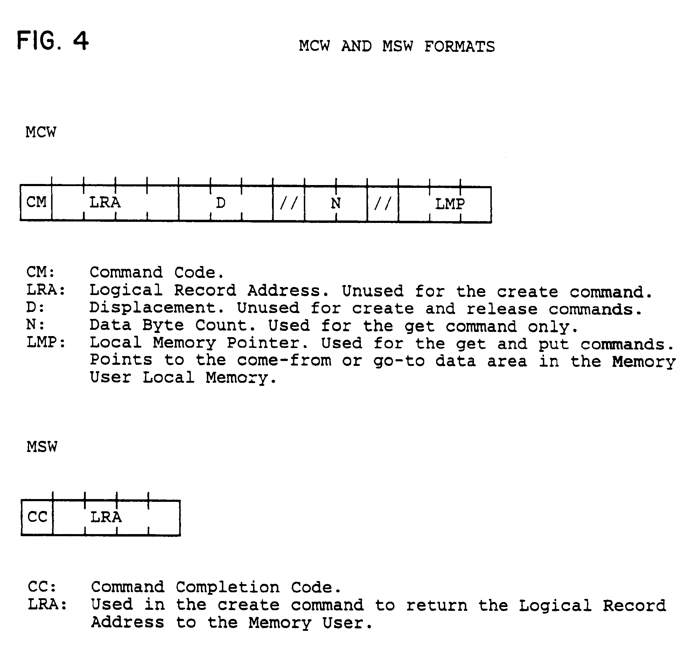

The formats of the commands and command responses, of the MCW and of the MSW are detailed later in connection with Figs.3 and 4.

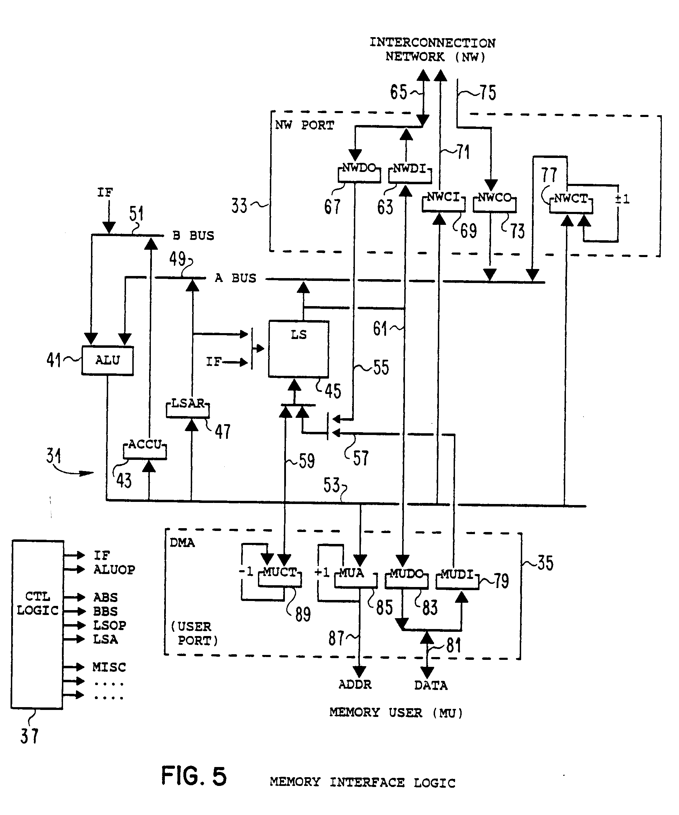

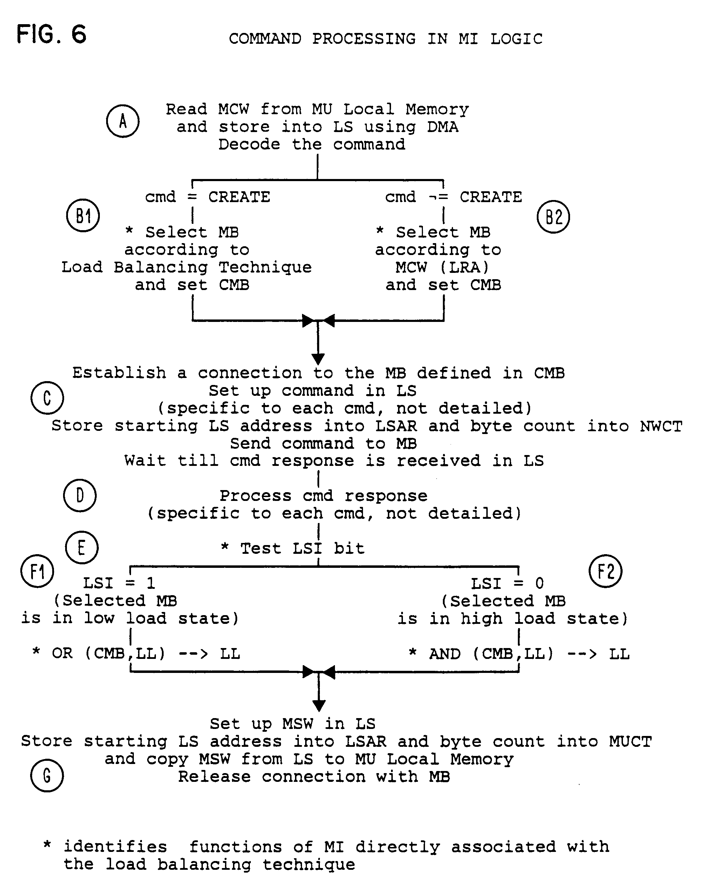

The command processing is done by a logic layer (in the MI) which downwards, has an interface to the memory user MU allowing read/write access to the MU local memory, and upwards, has another interface to the interconnection network NW. Details of the MI logic and its operation will be described later in connection with Figs.5 and 6.

One principle assumed for the present system is that the distribution of user data among the storage banks is arbitrary, i.e. there is no fixed association or preassignment between memory banks and users. One problem arising from this principle is that the memory banks may be utilized (loaded) unevenly. Thus, a few memory banks may be completely filled with data while others are not used at all. This may result in congestion, unnecessary waiting times, and loss of parallelism which could be avoided as long as the total memory space available is sufficient for all the data to be stored. The present invention solves this problem by balancing the load between all the memory banks.

### 2) TECHNIQUE FOR LOAD BALANCING

In present description, the term "load" is used in the following sense: The load of a memory bank is the amount of storage space (expressed in units such as bytes, words, or blocks of 256 bytes) which is actually assigned to records currently existing within the respective memory bank.

The "load status" of a memory bank is the result of a comparison between the current load of the memory bank and a predetermined threshold. This threshold may e.g. be 70% of the total storage space available in the respective memory bank. This load status can be represented by a binary "load status indicator". (If desirable, it would of course be possible to define several levels of load status. Thus, the actual load could be compared to three different thresholds, resulting in four different load status indications which could be represented by two bits.)

The solution of present invention for balancing the load (storage utilization) among all installed memory banks can be summarized as follows:
a) Keep with each user (e.g. in the memory interface) a table (a map) about the load status of each installed memory bank;
b) When a user wants to create a new record in the shared memory, select one of the memory banks by interrogating the load status table (to select any low load memory bank if possible);
c) With each information block flowing back anyway from the memory bank to a user (e.g. acknowledgement of a memory command received from and executed for that user), include some information on the load status of the respective memory bank;
d) Update the load status table kept with the user (or memory interface) by entering the received load status information.

This novel technique allows an even distribution of the load among all the memory banks with a minimum in extra operations, and requiring no additional data transfers at all because the load status information is carried in information blocks which are transferred anyway.

### 3) MEMORY INTERFACE FUNCTIONS AND COMMAND FORMATS

The function of the memory interface MI is to provide a standard decentralised memory interface to each memory user MU. It handles the memory commands which are presented by the memory user MU as follows. It selects the appropriate memory bank MB (using the load balancing technique of the present invention), sets up a connection to that MB through the interconnection network NW, builds and sends a command (which may also include data) over that connection, waits for a command response (which in certain cases also includes data from the MB), releases the connection and generates completion status data for the memory user MU.

Each command is composed of a 12-byte header followed by an optional data field. Each command response is composed of an optional data field followed by a 5-byte trailer.

Four different memory commands and associated command responses are provided. Their formats are illustrated in Fig.3, and they are briefly described in the following:

### CREATE (format: Cmd only)

This command causes creation of a RECORD (a logical unit of storage) in the shared memory and the assignment of a Logical Record Address (LRA) to it. The LRA is a system unique reference which allows to retrieve a memory record in the shared memory. A memory bank MB will be chosen according to the new load balancing technique presented here.

No memory space is allocated to a new record (as long as no data are to be stored yet).

The command response returns the LRA to the respective memory interface MI.

### PUT (format: Cmd, LRA, D, data)

The PUT command causes the data it carries with it to be written into the specified record (LRA) at the specified displacement D. Enough memory space is allocated to the record (when the PUT command is executed) so that the data can be stored.

The command response carries no specific data back to the memory interface MI (except for the Return Code RC contained in each command response).

### GET (format: Cmd, LRA, D, N)

The Get command causes reading of N data bytes from the specified record (LRA) at the specified displacement D.

The command response carries the N data bytes back to the memory interface MI.

### RELEASE (format: Cmd, LRA)

The Release command causes cancelling of the specified record (LRA) and releasing of the associated memory space.

The command response contains no specific data (except for the Return Code).

### Return Code Structure and Load Status Indicator:

The Return Code (RC) which is part of each command response returned by a memory bank is an 8-bit byte which has the following structure: The first four bits RRRR are a specific code which indicates the completion status of the respective memory command. The fifth bit L is a load status indicator (LSI) whose binary value indicates the load status of the respective memory bank: A 1 stands for low load (below a given threshold) and a 0 indicates high load.

The last three bits of the RC are unused in present example. However, they could be utilized to distinguish between several levels of storage load: With a two-bit load status indicator L (instead of the one bit mentioned above), one can distinguish four levels of utilization or load.

The LSI returned in the command response is generated by the MB based on the comparison of two quantities: The "free memory space" and the "free memory space threshold". The free memory space is the amount of memory locations in the MB which are not assigned to any record. That quantity is maintained by the MB control during command execution. The Create and Get commands which do not consume free memory space do not alter that quantity. The Put commands which consume memory space decrease the free memory space. The Release command will increase the free memory space. The free memory space threshold is a value which has been initialized in each MB.

The operation of the MBs will not be further described as it is not the subject of present invention.

### 4) MEMORY USER AND MEMORY CONTROL BLOCKS

The memory user MU can be viewed as a microprocessor with its main store which is called the MU local memory. The memory commands move data between the shared memory (the total set of all memory banks MB) and the MU local memory.

Information exchange between a memory user MU and its memory interface MI is effected through memory control blocks the formats of which are shown in Fig.4.

A memory command is presented by the memory user MU as a control block that is called "Memory Command Word" (MCW) and is set up in the local memory of the memory user MU. The MCW contains control information specifying the type of the memory command (create, get, put, release), the Logical Record Address (LRA), the data displacement (D) within the record, the data count (N), and the address of the data area within the MU local memory (local memory pointer LMP).

The completion status data is presented by the memory interface MI to the memory user MU as a control block in the MU local memory: the "Memory Status Word" (MSW). The status data contain information (CC) about whether the command execution was satisfactory or not. In the case of a Create command, the MSW also contains the Logical Record Address (LRA) of the created record.

### 5) MEMORY INTERFACE LOGIC

A block diagram of the memory interface logic is shown in Fig.5. Its elements and structure are as follows:

The MI basically comprises a central portion 31, an interconnect network (NW) port 33, a DMA portion or user port 35, and a control section 37.

The central portion 31 includes an ALU 41, an accumulator register (ACCU) 43, local storage LS 45 and local storage address register LSAR 47. An A bus 49 and a B bus 51 are connected to the inputs of the ALU, and a result bus 53 is connected to the output of the ALU. Input data to the LS are transferred on lines 55, 57, and 59, and output data from the LS are transferred on line 61.

NW port 33 comprises four registers and a counter. NW Data In (NWDI) register 63 is connected between LS output line 61 and a two-way NW data bus 65. NW Data Out (NWDO) register 67 is connected between LS data input line 55 and the NW data bus 65. NW Control In (NWCI) register 69 is connected between ALU result bus 53 and an NW control input line 71. NW Control Out (NWCO) register 73 is connected between A bus 49 and an NW output control line 75. An NW Counter (NWCT) 77 receives its input from ALU result bus 53. Its contents can be incremented (or decremented) by one unit when a byte was received from (or furnished to) the network, and it can be tested for zero.

User port 35 includes three registers and a counter. MU Data IN (MUDI) register 79 is connected between LS input line 57 and a two-way user data bus 81. MU Data Out (MUDO) register 83 is connected between LS output line 61 and the user data bus 81. MU Address (MUA) register 85 is connected between ALU output bus 53 and a user address line 87. An MU Counter (MUCT) 89 receives its input from ALU result bus 53. The contents can be decreased by one unit when a byte was received from (or furnished to) the user, and it can be tested for zero.

Control section 37 furnishes the following data or control signals:
- IF: = Immediate Field (LS Operand or LS Address)
- ALUOP: = ALU Operation code
(Add, Subtract, And, Or, Xor, Rotate, ...)
- ABS: = A Bus Source
- BBS: = B Bus Source
- LSOP: = LS Operation code (Read, Write, NOOP)
- LSA: = LS Address Control
- MISC: = Miscellaneous controls to write registers, start DMA, etc.

The MI logic has the following capabilities:
1- The MI Logic can perform arithmetic and boolean operations on two operands, one being an immediate value (IF) generated by the control section, and the second one being the contents of an LS location or of a control register.
2- The MI logic has read/write access to the MU local memory, the local memory address and the byte count being respectively specified in the MU Address Register (MUA) and the MU Count Register (MUCT). The source of the data during write (or the destination during read) is the LS addressed by the LS Address Register (LSAR).
3- The MI logic can establish a connection to a memory bank MB through the interconnection network NW by loading a connection request and the MB address (identifier) into the "NW Control In Register" (NWCI) and waiting for a connection grant to be returned in the "NW Control Out Register" (NWCO). The connection can be released in a similar way by loading a connection release request into the NWCI and waiting for a grant to be returned in the NWCO. The interconnection network NW will not be further described as it is not the subject of present invention. (Publications describing interconnection networks have been mentioned in section 1 above.) Once the connection is established to a memory bank MB, the MI logic can make a two way data transfer over that connection: assuming the LSAR is initialised to value A and the NW Count Register (NWCT) to value N, the N bytes located at LS(A) are read out and sent to the MB. This inbound data transfer terminates with NWCT=0 and LSAR=A+N. The MB is then supposed to return a string of bytes which are received and stored into the LS starting at address A+N. The number of received bytes is available in the NWCT at the completion of the outbound transfer. The commands and command responses are exchanged between the memory interface MI and a memory bank MB in that way.

### 6) COMMAND PROCESSING IN THE MEMORY INTERFACE LOGIC

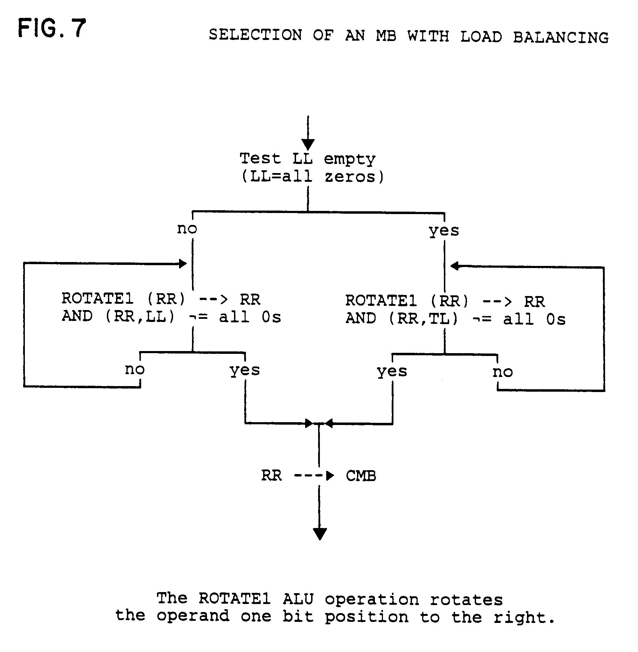

The flow diagram of Fig.6 illustrates the steps which are executed during command processing in the memory interface (MI) logic. In particular, it shows how the memory utilization (memory load status) information which is an important part of the load balancing technique of present invention, is handled during the processing of memory commands.
Step A: The MI reads the memory control word MCW from the user's local memory (using DMA techniques) and stores the MCW in its own local storage LS. It then decodes the command. Depending on the fact whether the command is a CREATE command or not, one of two different steps is taken next.
Step B1 (Cmd = CREATE): One of the memory banks is selected according to the load balancing technique (selection described in Section 7 in connection with Fig.7). The CMB variable designating the current memory bank (explained below) is set up.
Step B2 (Cmd = other than CREATE): The memory bank MB to be used for this command is determined by the LRA field of the MCW. Cf. remarks in Section 7b below. The CMB variable (designating current memory bank) is set up.
Step C: The MI establishes a connection through the interconnection network NW to the memory bank designated by the current CMB. A command is set up in local storage LS (no details given here because this is not essential to the load balancing technique). The starting address of the command in LS is entered into LSAR, and the byte count of the command is loaded into register NWCT. Then the command is sent to the selected memory bank MB. Returning of a command response from the MB is awaited.
Step D: The command response, when received in the MI, is processed (no details given here because this is not essential to the load balancing technique). The L bit of the Return Code is retained as load status indicator LSI.
Step E: The LSI bit is tested to determine the load status of the MB just used. Depending on the result, one of two different steps is taken next.
Step F1 (LSI = 1): The selected MB is in low load state. The LL variable (identifying all low load memory banks, explained below) and the CMB variable (designating the current memory bank) are combined by an OR operation to update LL so that it includes the last-used memory bank (which just reported its load status through the command response) to be in low load state.
Step F2 (LSI = 0): The selected MB is in high load state. The LL variable (identifying all low load memory banks) and the CMB variable (designating the current memory bank) are combined in an AND operation to update LL so that it reflects the high load status for the respective MB.
Step G: Now the MI sets up the memory status word MSW in its local storage LS (using the information received with the command response). It then loads the LS address where the MSW starts into the LSAR and the byte count of the MSW into the counter MUCT, and copies the MSW from the LS into the user's local memory. Finally, the connection through the interconnection network to the MB is released.

Boolean Variables in MI for Memory Bank Selection and Load Status Mapping:

The process uses four boolean variables CMB, RR, TL, and LL which reside in the local store (LS) of the memory interface MI and which are defined below. These four variables designate the memory bank MB currently in use by the respective MI, the Round Robin variable, the total list of all installed memory banks, and the list of memory banks which are presently in a low load status (i.e. which can take more CREATE requests). It is assumed for the examples given below that the maximum number of memory banks is eight. If more than eight memory banks would be provided, these three variables must then comprise two (or more) bytes instead of only one byte as assumed below.

### Current Memory Bank (CMB):

8 bits variable numbered 0 to 7.

All bits are zeros except one whose position indicates the selected memory bank MB involved in the current command.
ex: CMB = 00100000

In this example, MB number 2 is being selected.

### Round Robin Variable (RR):

8 bits variable numbered 0 to 7.

All bits are zeros except one whose position indicates the memory bank MB selected during the last Create command.
ex: RR = 00010000

In this example, MB number 3 was selected during the last Create command issued by the MI.

### Total List (TL):

8 bits variable numbered 0 to 7.

Bit positions in the TL are mapped to the installed memory banks MB.
ex: TL = 11110000

In this example, four MBs are installed in positions 0, 1, 2 and 3.

### Low Load List (LL)

8 bits variable numbered 0 to 7.

Meaningful bits correspond to installed memory banks MB as specified in TL.

A meaningful bit at one indicates that the associated MB is in low load state.

A meaningful bit at zero indicates that the associated MB is in high load state.
ex: LL = xxxx0000

In this example, x=0 if the associated MB is in high load state and x=1 if the associated MB is in low load state.

### 7) SELECTION OF A MEMORY BANK BY THE MEMORY INTERFACE

There are two different situations when a memory interface MI has to select a memory bank MB for executing a memory command: (a) For a CREATE command, a new memory bank has to be selected according to the load balancing technique of present invention. (b) For all other memory commands the memory bank is known (from the LRA parameter) and the MI can just identify this MB.

### a) Selection of an MB according to the load balancing technique:

As was already explained in the beginning, the selection of a memory bank MB for creating a new record is done by the load balancing technique which utilizes the knowledge about memory load status which is available in each memory interface MI: If there is any low-load MB, the MI selects the next one in a cyclic sequence which starts with the MB that was selected during the last Create command issued by the respective MI (there is an indicator RR in the MI which identifies this last-used MB). If there is no more low-load MB (i.e. all MBs are already heavily loaded), the MI must make a selection among all installed MBs and does this also by the same round-robin mechanism.

The operations to be executed by the MI for selection of an MB are shown in the flow diagram of Fig.7. First of all, a test is made whether the set LL (low-load MBs) is empty, by testing whether LL is all zeros. (1) If LL is not all zeros, i.e. there is at least one MB with low-load status, the RR value is increased by 1 (modulo m, the max number of MBs). This is done by a ROTATE1 ALU operation. Then the variables RR and LL are ANDed. If the result is all zeros, the new RR did not hit a low-load MB and the step must be repeated. If the result is not all zeros, the new RR hit a low load MB and thus can be used for selecting the MB to execute the CREATE command. (2) If LL is all zeros, there is no low-loaded MB and any MB can be used. Also here, the current RR is increased by 1 (modulo m). Then, the new RR and the variable TL are ANDed. If the result is all zeros the new RR did not hit an available MB and the step must be repeated. If the result is not all zeros the new RR hit an available MB and can be used for selecting the next MB to be accessed for creating a new record.

The selected MB is identified by the contents of RR. This RR contents is now loaded into CMB for further processing.

### b) Selection of an MB when the LRA is known:

The LRA which is returned by the MB on a CREATE command is a 32 bits identifier in which bits 8, 9 and 10 contain a code specifying the MB (000 identifies MB number 0; 001 identifies MB number 1; etc.).

Therefore, the MI logic knows which MB it has to establish a connection to.

Selecting an MB for commands other than CREATE consists in identifying the LRA field in the MCW (which has just been copied in LS), extracting bits 8 to 10 out of it, translating this three bits code into the eight bits format used in the CMB and loading the resulting value into the CMB.

## Claims

1. Method of load balancing a shared memory, formed by a plurality of storage units (17A,...17N) and shared by a plurality of user units (11A,...11N) able to transmit commands to said storage units, command responses being returned from the storage units to the user units, the method comprising the following steps:
- establishing with each user unit a load status table reflecting a storage load status of the storage units; and, in any sequence,
- inserting into a command response from a storage unit to a user unit a load status indicator reflecting a load status of said storage unit;
- updating the load status table of a user unit in response to a load status indicator received with a command response;
- sending storage record creation requests of a user unit according to its load status table thereby balancing the loads of the storage units.

2. Load balancing method according to claim 1, wherein
- a storage operation is caused by a command sent from a user unit to a storage unit;
- a load status indicator is inserted into each command response;
- each load status table reflects a storage load status of all storage units;
- and prior to sending a command from a user unit for requesting the creation of a new storage record in any storage unit, the user unit's load status table is interrogated and a storage unit is selected as the command recipient if a low load status is indicated in said table.

3. Load balancing method according to claim 1, wherein
- the load status indicator is a binary character which indicates either a high or a low load status.
- and the load status table comprises for each storage unit at least one binary character position indicating at least the last load status indicator received from the respective storage unit.

4. Load balancing method according to claim 3, wherein
- a particular percentage of its total storage capacity is defined as load threshold for each storage unit;
- and the load status indicator is determined by comparing the amount of available storage space to said load threshold.

5. Load balancing method according to claim 2 or 3, wherein
- an identifier is stored with each user unit, which is identifying that storage unit, which was most recently selected as the creation request recipient;
- a cyclic sequence of the storage units is defined;
- and, if the load status table indicates a low load status for a plurality of storage units, the first of them is selected which follows in said sequence after the one which is identified as last-selected recipient by said identifier.

6. Load balancing method according to claim 5, wherein
- the first storage unit is selected which follows in said sequence after the one which is identified as last-selected recipient by said identifier, if the load status table does not indicate a low load status for any storage unit.

7. Load balancing method according to any preceding claim, wherein
- a load status indicator is established with each storage unit, which is reflecting the current load status of said storage unit;
- if a Create command is sent by a user unit as the storage record creation request and upon reception of the Create command by a storage unit, a storage record is created, a record identifier allocated to it, and a command response is sent to the requesting user unit, comprising the load status indicator and said record identifier.

8. Load balancing method according to claim 7, wherein,
- if a Put or Release command is sent by a user unit for requesting to store data into a specified storage record or to cancel a specified storage record, and upon reception of the command by the storage unit which contains the record, the data are added to it or the record is released, the load status indicator is updated accordingly, and a command response is sent to the user unit, comprising the load status indicator.

9. Load-balanced shared memory device comprising a plurality of storage units (17A,...17N), a plurality of user units (11A,... 11N), and an interconnecting network (15) enabling common usage of storage units by user units, transmission of commands from a user unit to a storage unit, and transmission of command responses vice versa,
- each user unit comprises a load status table reflecting a storage load status of the storage units and being updated according to received command responses;
- each of at least two storage units comprises a load status indicating device reflecting its load status;
- a command response from a storage unit comprises a load status indicator corresponding to the load status reflected by the load status indicating device of said storage unit;
- the load-balanced shared memory device comprises a memory interface logic which routes storage record creation requests of each user unit according to the user unit's load status table, thereby balancing the loads of the storage units.

10. Load-balanced shared memory device according to claim 9, wherein
- the memory interface logic is modular and each user unit comprises its module (13A,... 13N) of said logic, each said module including one or more of: a user port (35), an interconnect network port (33), a logic and control section (37), and a local storage (45) with the load status table;
- each storage unit comprises a load status indicating device;
- the device is taylored by adding or removing user and/or storage units as needed.

## Patentansprüche

1. Technik für den Lastausgleich eines gemeinsam genutzten Speichers, der durch eine Mehrzahl an Speichereinheiten (17A, ... 17N) gebildet und von einer Mehrzahl an Benutzereinheiten (11A, ... 11N), die in der Lage sind, Befehle zu den genannten Speichereinheiten zu übertragen, gemeinsam genutzt wird, bei dem Befehlsantworten aus den Speichereinheiten zu den Benutzereinheiten zurückgeleitet werden, wobei die Technik die folgenden Schritte umfaßt:
- Erstellen einer Laststatustabelle, in der alle Benutzereinheiten aufgeführt sind, die den Speicherlaststatus der Speichereinheiten angibt; und, in jeder beliebigen Reihenfolge,
- Einfügen eines Laststatusindikators, der den Laststatus der genannten Speichereinheit angibt, in eine Befehlsantwort von einer Speichereinheit zu einer Benutzereinheit;
- Aktualisieren der Laststatustabelle einer Benutzereinheit, nachdem ein Laststatusindikator zusammen mit einer Befehlsantwort empfangen wurde;
- Senden einer Speicheraufzeichnungserstellungsanforderung einer Benutzereinheit gemäß ihrer Laststatustabelle, wodurch die Lasten der Speichereinheiten ausgeglichen werden.

2. Lastausgleichtechnik gemäß Anspruch 1, wobei
- eine Speicheroperation veranlaßt wird, indem ein Befehl von einer Benutzereinheit zu einer Speichereinheit gesendet wird;
- in jede Befehlsantwort ein Laststatusindikator eingefügt wird;
- jede Laststatustabelle einen Speicherlaststatus aller Speichereinheiten anzeigt;
- bevor ein Befehl von einer Benutzereinheit zur Anforderung der Erstellung einer neuen Speicheraufzeichnung in einer beliebigen Speichereinheit gesendet wird, die Laststatustabelle der Benutzereinheit abgefragt und eine Speichereinheit als Befehlsempfängerin ausgewählt wird, wenn in der genannten Tabelle ein niedriger Laststatus angegeben ist.

3. Lastausgleichtechnik gemäß Anspruch 1, bei dem
- der Laststatusindikator ein Binärzeichen ist, das entweder einen hohen oder einen niedrigen Laststatus anzeigt,
- und bei dem die Laststatustabelle für jede Speichereinheit mindestens eine Binärzeichenposition umfaßt, die mindestens den zuletzt von der entsprechenden Speichereinheit empfangenen Laststatusindikator anzeigt.

4. Lastausgleichtechnik gemäß Anspruch 3, bei dem
- ein bestimmter Prozentsatz seiner gesamten Speicherkapazität als Lastschwelle für jede Speichereinheit definiert ist;
- und bei dem der Laststatusindikator durch Vergleich der Menge an verfügbarem Speicherplatz mit der genannten Lastschwelle bestimmt wird.

5. Lastausgleichtechnik gemäß Anspruch 2 oder 3, bei dem
- zusammen mit jeder Benutzereinheit ein Identifikator gespeichert wird, der diese Speichereinheit identifiziert und der zuletzt als Erstellungsanforderungsempfänger ausgewählt wurde;
- eine zyklische Sequenz der Speichereinheiten definiert wird;
- und bei dem, wenn die Laststatustabelle einen niedrigen Laststatus für eine Mehrzahl an Speichereinheiten anzeigt, die erste von ihnen ausgewählt wird, die in der genannten Sequenz nach derjenigen folgt, die durch den genannten Identifikator als zuletzt ausgewählter Empfänger identifiziert wird.

6. Lastausgleichtechnik gemäß Anspruch 5, bei dem
- die erste Speichereinheit, die in der genannten Sequenz nach derjenigen folgt, die durch den genannten Identifikator als der zuletzt ausgewählte Empfänger identifiziert ist, wenn die Laststatustabelle nicht einen niedrigen Laststatus für eine der Speichereinheiten anzeigt.

7. Lastausgleichtechnik gemäß allen vorherigen Ansprüchen, bei dem
- für jede Speichereinheit ein Laststatusindikator eingerichtet wird, der den derzeitigen Laststatus der genannten Speichereinheit angibt;
- wenn von der Benutzereinheit ein CREATE-Befehl als Speicheraufzeichnungserstellungsanforderung gesendet wird, und wenn bei Empfang des CREATE-Befehls durch eine Speichereinheit eine Speicheraufzeichnung erstellt wird, ein Aufzeichnungsidentifikator zugeordnet ist und an die anfordernde Benutzereinheit eine Befehlsantwort gesendet wird, die den Laststatusindikator und den genannten Aufzeichnungsidentifikator umfaßt.

8. Lastausgleichtechnik gemäß Anspruch 7, bei dem
- wenn von einer Benutzereinheit ein PUT- oder ein RELEASE Befehl gesendet wird, um anzufordern, daß Daten in einer bestimmten Speicheraufzeichnung gespeichert werden sollen oder daß eine bestimmte Speicheraufzeichnung gelöscht werden soll, und beim Empfang des Befehls durch die Speichereinheit, die die Aufzeichnung enthält, die Daten hinzugefügt werden, die Aufzeichnung aufgelöst und der Laststatusindikator entsprechend aktualisiert und an die Benutzereinheit eine Befehlsantwort gesendet wird, die den Laststatusindikator umfaßt.

9. Gemeinsame Speichervorrichtung mit Lastausgleich, die eine Mehrzahl an Speichereinheiten (17A, ... 17N), eine Mehrzahl an Benutzereinheiten (11A, ... 11N) und ein Verbindungsnetz (15) umfaßt, das eine gemeinsame Nutzung der Speichereinheiten durch Benutzereinheiten, die Übertragung von Befehlen von einer Benutzereinheit zu einer Speichereinheit und umgekehrt die Übertragung von Befehlsantworten ermöglicht, wobei
- jede Benutzereinheit eine Laststatustabelle umfaßt, die den Speicherlaststatus der Speichereinheiten anzeigt und die entsprechend den empfangenen Befehlsantworten aktualisiert wird:
- jede der mindestens zwei Speichereinheiten umfaßt eine laststatusanzeigende Vorrichtung, die ihren Laststatus anzeigt;
- eine Befehlsantwort von einer Speichereinheit umfaßt einen Laststatusindikator, der dem Laststatus entspricht, der von der laststatusanzeigenden Vorrichtung der genannten Speichereinheit angezeigt wird;
- die gemeinsame Speichereinrichtung mit Lastausgleich umfaßt eine Speicherschnittstellenlogik, die Speicheraufzeichnungserstellungsanforderungen jeder Benutzereinheit entsprechend der Laststatustabelle der Benutzereinheit umleitet, wodurch die Lasten der Speichereinheiten ausgeglichen werden.

10. Gemeinsame Speichervorrichtung mit Lastausgleich gemäß Anspruch 9, wobei
- die Speicherschnittstellenlogik modular ist und jede Benutzereinheit ihr Modul (13A, ... 13N) der genannten Logik umfaßt, wobei jedes Modul eine oder mehrere der folgenden Komponenten umfaßt: einen Benutzerport (35), einen Verbindungsnetzport (33), einen Logik- und Steuerabschnitt 37 und einen lokalen Speicher (45) mit der Laststatustabelle:
- jede Speichereinheit umfaßt eine laststatusanzeigende Vorrichtung;
- die Vorrichtung wird durch das Hinzufügen oder Entfernen von Benutzer- und/oder Speichereinheiten nach Bedarf benutzergerecht angepaßt.

## Revendications

1. Procédé d'équilibrage de charge dans une mémoire partagée formée d'une pluralité d'unités de stockage (17A,...17N) et partagée par une pluralité d'unités utilisatrices (11A,...11N) capables de transmettre des commandes auxdites unités de stockage, des réponses aux commandes étant retournées à partir des unités de stockage vers les unités utilisatrices, le procédé comprenant les étapes suivantes :
- établir avec chaque unité utilisatrice une table d'état de charge reflètant un état de charge de stockage des unités de stockage ; et, dans un ordre quelconque,
- insérer dans une réponse de commande d'une unité de stockage vers une unité utilisatrice un indicateur d'état de charge reflètant un état de charge de ladite unité de stockage ;
- mettre à jour la table d'état de charge d'une unité utilisatrice en réponse à un indicateur d'état de charge reçu avec une réponse à une commande ;
- émettre des requêtes de création de registres de stockage en fonction de sa table d'état de charge, équilibrant de ce fait les charges des unités de stockage.

2. Procédé d'équilibrage de charge selon la revendication 1, dans lequel
- une opération de stockage est effectuée par une commande envoyée d'une unité utilisatrice vers une unité de stockage ;
- un indicateur d'état de charge est inséré dans chaque réponse à une commande ;
- chaque table d'état de charge reflète un état de charge de stockage de toutes les unités de stockage ;
- et avant d'émettre une commande d'une unité utilisatrice pour demander la création d'un nouveau registre de stockage dans une unité de stockage quelconque, la table d'état de charge de l'unité utilisatrice est interrogée et une unité de stockage est sélectionnée comme étant le récipiendaire de la commande si un état de faible charge est indiqué dans ladite table.

3. Procédé d'équilibrage de charge selon la revendication 1, dans lequel
- l'indicateur d'état de charge est un caractère de charge binaire qui indique un état de charge élevé ou faible ;
- et la table d'état de charge comporte pour chaque unité de stockage au moins une position de caractère binaire indiquant au moins le dernier indicateur d'état de charge reçu de l'unité de stockage respective.

4. Procédé d'équilibrage de charge selon la revendication 3, dans lequel
- un pourcentage particulier de sa capacité de stockage totale est défini comme seuil de charge pour chaque unité de stockage ;
- et l'indicateur d'état de charge est déterminé en comparant la quantité d'espace de stockage disponible audit seuil de charge.

5. Procédé d'équilibrage de charge selon la revendication 2 ou 3, dans lequel
- un identifieur est mémorisé dans chaque unité utilisatrice, identifiant l'unité de stockage qui a été le plus récemment choisie comme récipiendaire de la requête de création ;
- une séquence cyclique des unités de stockage est définie ;
- et, si la table d'état de charge indique un état de charge faible pour une pluralité d'unités de stockage, la première d'entre elles est choisie comme étant celle qui suit dans ladite séquence après celle qui a été identifiée comme le dernier récipiendaire choisi par ledit identifieur.

6. Procédé d'équilibrage de charge selon la revendication 5, dans lequel
- la première unité de stockage est choisie comme étant celle qui, dans ladite séquence, vient après celle qui est identifiée comme étant le dernier récipiendaire choisi par ledit identifieur, si la table d'état de charge n'indique pas un état de charge faible pour l'une quelconque des unités de stockage.

7. Procédé d'équilibrage de charge selon l'une quelconque des revendications précédentes, dans lequel
- un indicateur d'état de charge est établi dans chacune des unités de stockage, reflètant l'état de charge courante de ladite unité de stockage ;
- si une commande de CREATION est envoyée par une unité utilisatrice comme étant la requête de création d'un registre de stockage et suite à la réception de la commande de CREATION par une unité de stockage, un registre de stockage est créé, un identifieur de registre lui est alloué, et une réponse à la commande est envoyée à l'unité utilisatrice demanderesse, comprenant l'indicateur d'état de charge et ledit identifieur de registre.

8. Procédé d'équilibrage de charge selon la revendication 7, dans lequel
- si une commande de METTRE ou de RELACHER est envoyée par une unité utilisatrice pour demander le stockage de données dans un registre de stockage particulier ou pour supprimer un registre de stockage particulier, et lors de la réception de la commande par l'unité de stockage qui contient le registre, les données y sont ajoutées ou le registre est libéré, l'indicateur d'état de charge est mis à jour en conséquence, et une réponse à la commande est envoyée à l'unité utilisatrice, comprenant l'indicateur d'état de charge.

9. Dispositif de mémoire partagée à équilibrage de charge comprenant une pluralité d'unités de stockage (17A,...17N), une pluralité d'unités utilisatrices (11A,...11N) et un réseau d'interconnexion (15) autorisant l'utilisation commune d'unités de stockage par des unités utilisatrices, la transmission de commandes d'une unité utilisatrice vers une unité de stockage, et (vice versa) la transmission de réponses aux commandes, dans lequel
- chaque unité utilisatrice comporte une table d'état de charge reflètant un état de charge de stockage des unités de stockage, la table étant mise à jour en conformité avec les réponses aux commandes reçues ;
- chacune parmi au moins deux unités de stockage comporte un dispositif indiquant l'état de charge reflètant son état de charge ;
- une réponse aux commandes d'une unité de stockage comporte un indicateur d'état de charge correspondant à l'état de charge reflété par le dispositif indiquant l'état de charge de ladite unité de stockage ;
- le dispositif de mémoire partagée à équilibrage de charge comporte une logique d'interface mémoire qui dirige les requêtes de création de registres de stockage de chaque unité utilisatrice en fonction de la table d'état de charge de l'unité utilisatrice, équilibrant de ce fait les charges des unités de stockage.

10. Dispositif de mémoire partagée à équilibrage de charge selon la revendication 9, dans lequel
- l'interface logique mémoire est modulaire et chaque unité utilisatrice comporte son module (13A,...13N) de ladite logique, chacun desdits modules incluant un ou plusieurs parmi : un port utilisateur (35), un port d'interconnexion réseau (33), une partie logique et de contrôle (37), et une mémoire locale avec la table d'état de charge ;
- chaque unité de stockage comporte un dispositif indiquant l'état de charge ;
- le dispositif est adapté en additionnant ou enlevant des unités de stockage et/ou utilisatrices tel que nécessaire.
